# EUROPEAN PATENT SPECIFICATION

(11) **EP 1 001 158 B1**
(45) Date of publication and mention of the grant of the patent: **09.03.2005**
(21) Application number: 99121664.9
(22) Date of filing: 02.11.1999
(51) Int. Cl.: F02M 37/10

(54) **A structure for the mounting of an electric pump in the fuel tank of a motor vehicle, and a respective intake filter**
Vorrichtung zum Einbauen einer elektrischen Brennstoffpumpe in einem Tank eines Motorfahrzeuges und Pumpeneinlassfilter
Dispositif pour monter une pompe électrique à carburant dans un réservoir d'un véhicule à moteur et filtre d'admission de la pompe

(30) Priority: 09.11.1998 IT TO980941
(43) Date of publication of application: 17.05.2000
(73) Proprietor: ERGOM HOLDING S.p.A, 10071 Borgaro Torinese (Torino) (IT)
(72) Inventor: Cimminelli, Francesco, 10121 Torino (IT); Castagneri, Giulio, 10076 Nole (TORINO) (IT); Lobascio, Osvaldo, 10078 Venaria Reale,(TORINO) (IT)
(74) Representative: Rambelli, Paolo

(56) References cited:
- EP-A- 0 542 547
- EP-A- 0 728 937
- DE-A- 4 414 281
- JP-A- 60 147 565
- US-A- 4 743 370
- US-A- 4 878 518
- US-A- 5 002 467
- US-A- 5 647 329
- US-A- 5 665 229

## Description

The present invention relates in general to motor-vehicle fuel-supply systems of the type comprising an electric pump mounted inside the fuel tank.

According to a solution commonly used in these supply systems, the electric pump draws the fuel from the tank through an intake duct in order to send it towards the engine of the motor vehicle through a delivery duct and auxiliary pipes, and is mounted in the tank in a substantially cylindrical support body called a stilling vessel, a wall of which bears on the base of the tank and in which there is always a fuel level such that the electric pump can operate correctly.

Italian patent application TO92A000403 relates to an electric pump mounted in a stilling vessel with the interposition of a support structure having the function of damping the vibrations to which the electric pump is subject relative to the stilling vessel when the motor vehicle is in operation. In particular, this structure comprises a plurality of flexible, resilient fins which extend, for a predominant axial portion of the length of the electric pump, between the radially outer wall of the electric pump and the inner surface of the side wall of the stilling vessel. In order to be able to damp the vibrations of the electric pump effectively, the flexible fins have to extend in a fairly wide radial space such as to allow both for the movements of the electric pump and for the presence of the fins. Moreover, the fins have to be of sufficient length to be quite flexible in order to be able to resist even small vibrations effectively. They may advantageously be S-shaped or in spiral form so as also to be elongate, even if the available radial space in which they can extend is quite small. Another example of such damping means given in EP-A-0 728 937.

In more recent applications of motor-vehicle supply systems, in addition to the electric pump, the stilling vessel contains a fairly bulky main fuel filter mounted in a respective annular casing arranged coaxially outside the electric pump so as to surround it.

More specifically, the present invention relates to a structure for the mounting of an electric pump in the fuel tank of a motor vehicle, in which a delivery duct and an intake duct for the fuel are associated with the electric pump at its opposite axial ends, the structure comprising a substantially cylindrical support body for bearing on the base of the tank, the support body having, in its upper portion, means for connection to the delivery duct of the electric pump, the support body including a casing defining an annular chamber which is connected to the delivery duct and in which a main fuel filter is housed, the casing defining an axial cavity in which the electric pump is disposed, and means being provided between the body and the electric pump for damping the vibrations of the electric pump relative to the support body.

In known solutions of the type defined above, the means for damping the vibrations of the electric pump which, as stated above, consist of a plurality of resilient fins interposed between the electric pump and the support body, may be arranged between the electric pump and the inner wall of the casing of the main filter, that is, inside the cavity, or between the outer wall of the casing of the main filter and the inner surface of the side wall of the stilling vessel. Of these solutions, the second offers the advantage that the main filter used therein has a larger diameter than that of the first solution and therefore has a larger useful filtering surface which facilitates the fulfilment of an essential requirement for motor-vehicle builders which is that the operation of the main filter must be guaranteed throughout the life of the vehicle (estimated as between 150,000 and 200,000 km.) without the need for maintenance operations.

In both of the above-mentioned cases, however, the useful space in which the fins of the damping structure can extend and in which the electric pump can move is reduced because of the presence of the main filter casing. Since the stilling vessel is inserted in the tank through an inspection hole or opening of standard dimensions, its outside diameter cannot exceed that of the inspection opening and it is thus not possible to produce the vessel with larger dimensions to compensate for the lack of space due to the presence of the main filter and of the damping fins. For this reason, the main filter tends to be formed with smaller dimensions in order also to provide sufficient space inside the stilling vessel for the arrangement of the damping structure. However, in contrast with the requirement indicated above, the reduction in the dimensions of the main filter inevitably reduces its filtering capacity, and hence its life.

In order to overcome this problem, the subject of the invention is a structure for the mounting of an electric pump of the type defined above, characterized in that the damping means comprise a resilient member connected, on the one hand, to the intake duct of the electric pump and, on the other hand, to the casing of the main filter.

By virtue of this concept, the structure for damping the vibrations of the electric pump is confined to a region of the stilling vessel in the vicinity of the base of the support body where the space available is larger, both because the diameter of the intake duct is considerably smaller than the diameter of the electric pump and because the casing of the main filter is not generally present in this region, which is therefore not affected by the reduction in space in the stilling vessel due to the presence of the casing of the main filter. The body of the stilling vessel can thus have compact dimensions since it is not necessary to provide an additional space for the arrangement of the damping structure, and there is no penalty with regard to the size of the casing and hence of the main filter.

JP 60 147565 A discloses an intake filter for the intake duct of an electric fuel pump for a motor-vehicle tank, comprising a generally sack-shaped filtering element and having a lower portion to be disposed in the vicinity of the base of a substantially cylindrical body for supporting the electric pump, and an upper portion having means for leaktight coupling with the intake duct, wherein that means are associated with the upper portion of the intake filter for damping the vibrations of the electric pump relative to the support body.

By virtue of this concept, the filter incorporates the structure for damping the vibrations of the electric pump so that it is possible to reduce the number of parts of the fuel-supply system as well as the steps for its assembly, advantageously reducing the overall costs of the system. Moreover, it is possible to provide a larger useful space for the fuel inside the stilling vessel since the damping structure is very compact because it is incorporated in the structure of the intake filter.

Further characteristics and advantages of the invention will become clearer from a reading of the following detailed description, provided purely by way of non-limiting example with reference to the appended drawings, in which:
Figure 1 is a sectioned side elevational view showing schematically a structure for the mounting of an electric pump in a motor-vehicle fuel tank, according to the invention,
Figure 2 is an elevational view, sectioned on the line II-II of Figure 1,
Figure 3 is a view of a detail indicated by the arrow III in Figure 1, on an enlarged scale, and
Figure 4 is a schematic view of a detail indicated by the arrow IV in Figure 2, on an enlarged scale.

With reference to the drawings, a structure for the mounting of an electric pump 3 in a motor-vehicle tank 2 is generally indicated 1. The structure 1 comprises a support body 5 having a substantially cylindrical side wall 5a and a base wall 7, a face of which is intended to bear on the bottom 2a of the tank 2.

The body 5 has an upper closure plate 9 which defines a tubular appendage 11 for the passage of the fuel drawn in from the tank, the appendage being connected by means of a corrugated pipe 13 to a duct 15 for the outlet of the fuel from the tank 2. The duct 15 is formed in a closure cover 16 of an inspection opening 2c formed in the upper wall 2b of the tank 2.

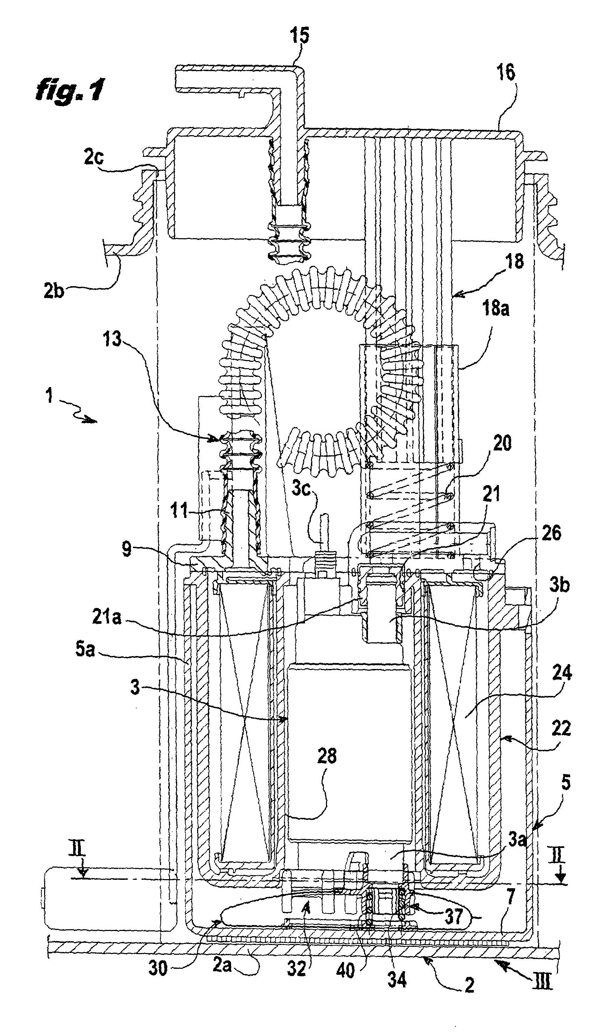

In the embodiment shown in Figure 1, a pillar 18 extends from the cover 16 towards the body 5 and a tubular portion 18a of the plate 9 is engaged thereon with the interposition of a spring 20 the function of which is to exert a force on the plate 9, and hence on the body 5, so as to push it towards the bottom 2a of the tank. This force may, however, by produced by means of a resilient connection other than that described between the plate 9 and the cover 16.

Associated with the electric pump 3 are an intake duct 3a which opens in the vicinity of the base wall 7 of the body 5 and a delivery duct 3b which extends from the end axially remote from the duct 3a and which is engaged, with the interposition of a collar 21a of elastomeric material or the like, in an axial seat 21 of the closure plate 9, the seat 21 normally being formed in an eccentric position relative to the axis of the electric pump 3. An electrical-supply cable 3c is also connected to the upper portion of the electric pump 3.

The electric pump 3 is housed in the stilling vessel 5 in a cylindrical cavity 28 defined laterally by an annular casing 22 inside which an annular chamber is defined, in which the main filter 24 of the fuel-supply system is disposed, the annular chamber of the casing 22 being connected, on the one hand, to the delivery duct 3b of the electric pump, by means of an auxiliary duct 26 formed in the plate 9 and, on the other hand, to the tubular appendage 11 via the main filter 24.

Since the electric pump 3 is inevitably subject to torsional and/or radial vibrations in operation, to prevent these from being transmitted to the body 5 and by the body 5 to the tank 2, giving rise to annoying noises during the operation of the motor vehicle, it is necessary to provide means for damping these vibrations.

According to the invention, these damping means comprise a resilient member 32, preferably formed as a single piece of moulded plastics material having a substantially disk-like portion in which a plurality of resiliently flexible arms 36 are defined, the arms extending generally radially from a central region of the disk as far as an element 37 for engagement in the base of the casing 22 of the main filter 24.

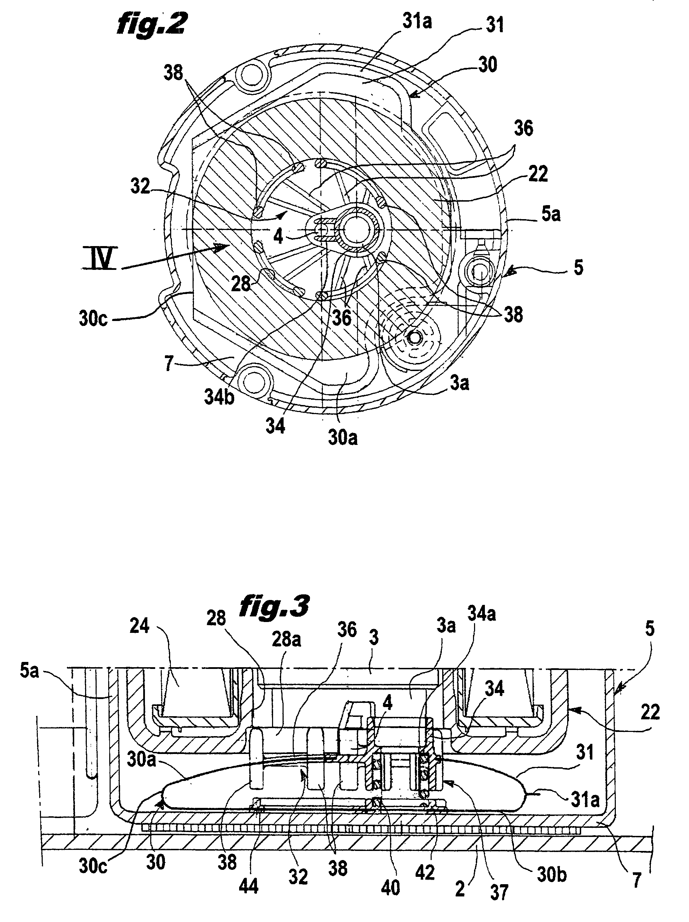

In particular, the arms 36 are connected, in the central region of the member 32, to a collar 34 for fixing to the intake duct 3a of the electric pump 3. If the intake duct 3a extends from the electric pump 3 in a position spaced from its axis, the collar 34 is arranged correspondingly out of alignment, as shown in the drawings and, in this case, the arms 36 may extend in an almost radial direction from the centre of the collar 34, or from the centre of the member 32, or from an intermediate position between them. An axial appendage 4 may also be provided, extending centrally from the base of the electric pump 3, beside the delivery duct 3a, in order to engage a corresponding seat defined by a fork-shaped portion 34b (see Figure 2) connected to the collar 34.

The arms 36 may be straight, as shown by way of example in Figure 2, or may be curved, for example, they may be S-shaped or in spiral form. In the latter two cases, they may be shaped according to the direction of rotation of the internal members of the electric pump 3 and facing so as to oppose the torsional and/or radial vibrations generated by this rotation.

Finger-like axial appendages 38 are connected to the radially outer ends of the arms 36 and, for example, are connected in pairs so as to form U-shaped or H-shaped elements, the upper portions of which are intended to be fitted in an annular seat 28a formed in the end of the cavity 28 adjacent the base of the casing 22. The appendages 38, which are preferably also made of plastics material integrally with the arms 36, advantageously have at least a slight ability to deform resiliently so that they can be engaged by radial interference against the annular wall which defines the seat 28a.

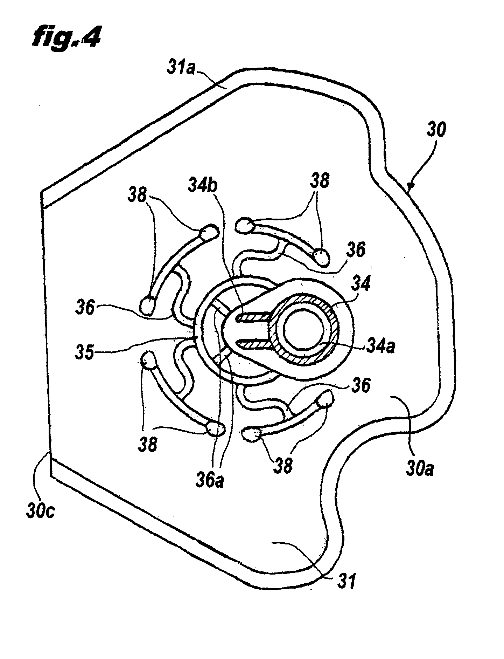

The member 32 may, however, also be of a different shape from that described up to now, its function remaining mainly that of damping radial and/or torsional vibrations of the electric pump 3. For example, it may be formed as shown in Figure 4, with a plurality of first radial arms 36a which extend from a bracket-like portion connected externally to the collar 34 as far as an auxiliary ring 35 from which a plurality of S-shaped arms 36, oriented differently in pairs, in turn project, each arm being connected to a respective arcuate portion which is coaxial with the auxiliary ring 35 and from the ends of which respective finger-like appendages 38 extend transversely.

An intake filter or pre-filter, generally indicated 30, is connected to the intake duct 3a of the electric pump 3.

The pre-filter 30 has a generally known structure formed by a filtering element 31, for example, of the plastics or metal mesh type, the function of which is to prevent impurities (generally with dimensions greater than 60 microns) from passing towards the electric pump 3. The element 31 is folded at 30c and is welded along a peripheral edge 31a so as to adopt a generally sack-like configuration which includes an upper portion 30a and a lower portion 30b. The portion 30a has means for leaktight coupling with the intake duct 3a, and the lower portion 30b is intended to be arranged bearing on or adjacent the base wall 7 of the body 5.

The resilient member 32 described above is advantageously rendered integral with the upper portion 30a of the pre-filter 30, although the member 32 could be formed separately from the pre-filter 30. In the preferred embodiment, in which the member 32 is integral with the portion 30a, the fixing collar 34 of the member 32 is also used for the leaktight connection of the pre-filter 30 to the intake duct 3a and the arms 36 are fixed to the collar 34 and to the portion 30a. The member 32 is preferably connected to the portion 30a by means of an operation to mould it onto the filtering element 31.

An annular projection 34a preferably extends from the inner wall of the collar 34 and defines, on one side, a travel limit stop for the insertion of the intake duct 3a and, on the opposite side, a shoulder for the upper end of a helical spring 40, the lower end of which bears on the base wall 7 of the body 5, the lower portion 30b of the pre-filter 30 being interposed between the spring 40 and the wall 7. The spring 40 exerts an axial force, relative to the electric pump 3, in order to keep the collar 34 in the correct position and to damp any axial vibrations which may arise during the operation of the electric pump 3.

On the lower portion 30b of the intake filter 30 there is advantageously an element 42 for supporting the lower end of the spring 40 so as to prevent the spring from damaging the lower portion 30b by wear. In this case, the element 42 is connected to a plurality of support members 44 disposed beneath each of the engagement appendages 38 of the resilient member 32 so as to provide travel-limit pads for the appendages 38. The element 42 with the respective support members 44 is preferably formed by being moulded onto the lower portion 30b of the intake filter 30.

## Claims

1. Motor-vehicle fuel-supply system comprising a structure for the mounting of an electric pump (3) in a fuel tank (2) of a motor-vehicle, in which a delivery duct (3b) and an intake duct (3a) for the fuel are associated with the electric pump (3) at its opposite axial ends, the structure comprising a substantially cylindrical support body (5) for bearing on the base (2a) of the tank (2), the support body (5) having, in its upper portion, means (9, 21, 21a) for connection to the delivery duct (3b) of the electric pump (3), the support body (5) including a casing (22) defining an annular chamber which is connected to the delivery duct (3b) and in which a main fuel filter (24) is housed, the casing (22) defining an axial cavity (28) in which the electric pump (3) is disposed, and means (32) being provided between the support body (5) and the electric pump (3) for damping vibrations of the electric pump (3) relative to the support body (5), **characterized in that** the damping means comprise a resilient member (32) connected, on the one hand, to the intake duct (3a) of the electric pump (3) and, on the other hand, to the casing (22) of the main filter (24).

2. A system according to Claim 1, **characterized in that** the resilient member (32) comprises a plurality of resiliently flexible arms (36) which extend in a substantially radial direction between a collar (34) for fixing to the intake duct (3a) and an element (38) for engagement in the base (28a) of the casing (22).

3. A system according to Claim 2, **characterized in that** the engagement element (38) can be engaged in the axial cavity (28) of the casing (22) of the main filter (24).

4. A system according to Claim 3, **characterized in that** the engagement element comprises a plurality of resilient appendages (38) which can be fitted with interference in a seat (28a) formed in the vicinity of the base of the casing (22) of the main filter (24).

5. A system according to any one of Claims 1 to 4, **characterized in that** the resilient member (32) is formed in a single piece of plastics material.

6. A system according to any one of Claims 1 to 5, **characterized in that** an intake filter (30) is associated with the intake duct (3a) of the electric pump (3) and includes a generally sack-shaped filtering element (31) having a lower portion (30b) which is intended to be disposed in the vicinity of the base wall (7) of the support body (5) and an upper portion (30a) having means (34) for leaktight coupling with the intake duct (3a) of the electric pump (3), the resilient member (32) being connected rigidly to the upper portion (30a) of the intake filter (30).

7. A system according to Claim 6, **characterized in that** the resilient member (32) is moulded onto the upper portion (30a) of the filtering element (30).

8. A system according to Claim 6 or Claim 7, **characterized in that** a thrust spring (40) is interposed between the means (34) for the leaktight coupling of the intake filter (30) with the intake duct (3a) and the lower portion (30b) of the intake filter (30).

9. A system according to Claim 8, **characterized in that** the lower portion (30b) of the intake filter (30) has an element (42) for supporting one end of the thrust spring (40).

10. A system according to Claim 9, **characterized in that** members (44) for supporting ends of the appendages (38) of the engagement element of the resilient member (32) are connected to the supporting element (42).

11. A system according to Claim 9 or Claim 10, **characterized in that** the supporting element (42, 44) is made of plastics material moulded onto the lower portion (30b) of the filtering element (30).

## Patentansprüche

1. Kraftstoffeinfüllsystem für Kraftfahrzeuge mit einem Aufbau, um in einem Tank (2) eines Kraftfahrzeugs eine elektrische Pumpe (3) anzubringen, an deren axial gegenüber liegenden Enden ein Förderrohr (3b) und ein Ansaugrohr (3a) für den Kraftstoff angeordnet sind, wobei der Aufbau einen im Wesentlichen zylindrischen Tragkörper (5) enthält, der auf dem Boden (2a) des Tanks (2) aufliegt, wobei der Tragkörper (5) an seinem oberen Teil eine Einrichtung (9, 21, 21a) zur Verbindungserstellung mit dem Förderrohr (3b) der elektrischen Pumpe (3) besitzt, wobei der Tragkörper (5) ein Gehäuse (22) aufweist, das eine ringförmige Kammer bildet, die mit dem Förderrohr (3b) verbunden ist und in der ein Kraftstoff-Hauptfilter (24) untergebracht ist, wobei das Gehäuse (22) einen axialen Hohlraum (28) bildet, in dem die elektrische Pumpe (3) angeordnet ist, und wobei zwischen dem Tragkörper (5) und der elektrischen Pumpe (3) eine Einrichtung (32) zur Dämpfung von Vibrationen der elektrischen Pumpe (3) relativ zum Tragkörper (5) vorgesehen ist, **dadurch gekennzeichnet, dass** die Dämpfungseinrichtung ein elastisches Element (32) enthält, das einerseits mit dem Ansaugrohr (3a) der elektrischen Pumpe (3) und andererseits mit dem Gehäuse (22) des Hauptfilters (24) verbunden ist.

2. System gemäß Anspruch 1, **dadurch gekennzeichnet, dass** das elastische Element (32) eine Vielzahl von elastischen, flexiblen Armen (36) enthält, die im Wesentlichen radial zwischen einem Hals (34), um das Ansaugrohr (3a) zu befestigen, und einem Element (38) verlaufen, das in den Boden (28a) des Gehäuses (22) eingreift.

3. System gemäß Anspruch 2, **dadurch gekennzeichnet, dass** das Eingreifelement (38) mit dem axialen Hohlraum (28) des Gehäuses (22) des Hauptfilters (24) in Eingriff gebracht werden kann.

4. System gemäß Anspruch 3, **dadurch gekennzeichnet, dass** das Eingreifelement eine Vielzahl von elastischen Verlängerungen (38) besitzt, die mit einem Übermaß in einen Sitz (28a) eingesetzt werden können, der in der Nähe des Bodens des Gehäuses (22) des Hauptfilters (24) ausgebildet ist.

5. System gemäß irgendeinem der Ansprüche 1 bis 4, **dadurch gekennzeichnet, dass** das elastische Element (32) in einem einzigen Stück aus Kunststoff hergestellt wird.

6. System gemäß irgendeinem der Ansprüche 1 bis 5, **dadurch gekennzeichnet, dass** ein Ansaugfilter (30) dem Ansaugrohr (3a) der elektrischen Pumpe (3) zugeordnet ist und ein im Allgemeinen sackförmiges Filterelement (31) aufweist, das einen unteren Teil (30b), der dazu vorgesehen ist, um in der Nähe der Bodenwand (7) des Tragkörpers (5) angeordnet zu werden, sowie einen oberen Teil (30a) besitzt, der mit einer Einrichtung (34) versehen ist, um einen dichten Anschluss mit dem Ansaugrohrrohr (3a) der elektrischen Pumpe (3) herzustellen, wobei das elastische Element (32) mit dem oberen Teil (30a) des Ansaugfilters (30) starr verbunden ist.

7. System gemäß Anspruch 6, **dadurch gekennzeichnet, dass** das elastische Element (32) auf den oberen Teil (30a) des Filterelements (30) gegossen wird.

8. System gemäß Anspruch 6 oder Anspruch 7, **dadurch gekennzeichnet, dass** eine Druckfeder (40) zwischen der Einrichtung (34) für den dichten Anschluss des Ansaugfilters (30) mit dem Ansaugrohr (3a) und dem unteren Teil (30b) des Ansaugfilters (30) vorgesehen ist.

9. System gemäß Anspruch 8, **dadurch gekennzeichnet, dass** der untere Teil (30b) des Ansaugfilters (30) ein Element (42) besitzt, um ein Ende der Druckfeder (40) abzustützen.

10. System gemäß Anspruch 9, **dadurch gekennzeichnet, dass** Elemente (44), um Enden der Verlängerungen (38) des Eingreifelements des elastischen Elements (32) aufzunehmen, mit dem Abstützelement (42) verbunden sind.

11. System gemäß Anspruch 9 oder Anspruch 10, **dadurch gekennzeichnet, dass** das Abstützelement (42, 44) aus einem Kunststoff hergestellt wird, der auf den unteren Teil (30b) des Filterelements (30) gegossen wird.

## Revendications

1. Système d'alimentation en carburant pour véhicule à moteur comprenant une structure pour le montage d'une pompe électrique (3) dans un réservoir à carburant (2) d'un véhicule à moteur, dans lequel un conduit de refoulement (3b) et un conduit d'admission (3a) pour le carburant sont associés à la pompe électrique (3) en ses extrémités axiales opposées, la structure comprenant un corps de support sensiblement cylindrique (5) destiné à reposer sur le fond (2a) du réservoir (2), le corps de support (5) comportant, dans sa partie supérieure, un moyen (9, 21, 21a) permettant la connexion au conduit de refoulement (3b) de la pompe électrique (3), le corps de support (5) comportant un boîtier (22) qui définit une chambre annulaire qui est connectée au conduit de refoulement (3b) et dans laquelle est logé un filtre à carburant principal (24), le boîtier (22) définissant une cavité axiale (28) dans laquelle la pompe électrique (3) est placée, et un moyen (32) étant prévu entre le corps de support (5) et la pompe électrique (3) pour amortir les vibrations de la pompe électrique (3) par rapport au corps de support (5), **caractérisé en ce que** le moyen d'amortissement comprend un élément élastique (32) connecté, d'une part, au conduit d'admission (3a) de la pompe électrique (3) et, d'autre part, au boîtier (22) du filtre principal (24).

2. Système selon la revendication 1, **caractérisé en ce que** l'élément élastique (32) comprend une pluralité de bras flexibles de manière élastique (36) qui s'étendent dans une direction sensiblement radiale entre un collier (34) permettant la fixation au conduit d'admission (3a) et un élément (38) permettant l'engagement dans le fond (28a) du boîtier (22).

3. Système selon la revendication 2, **caractérisé en ce que** l'élément d'engagement (38) peut être engagé dans la cavité axiale (28) du boîtier (22) du filtre principal (24).

4. Système selon la revendication 3, **caractérisé en ce que** l'élément d'engagement comprend une pluralité d'appendices élastiques (38) qui peuvent être emboîtés dans un siège (28a) formé au voisinage du fond du boîtier (22) du filtre principal (24).

5. Système selon l'une quelconque des revendications 1 à 4, **caractérisé en ce que** l'élément élastique (32) est fait d'une seule pièce en matière plastique.

6. Système selon l'une quelconque des revendications 1 à 5, **caractérisé en ce qu'**un filtre d'admission (30) est associé au conduit d'admission (3a) de la pompe électrique (3) et comporte un élément filtrant globalement en forme de sac (31) ayant une partie inférieure (30b) qui est destinée à être placée au voisinage de la paroi de base (7) du corps de support (5) et une partie supérieure (30a) comportant un moyen (34) permettant l'accouplement étanche avec le conduit d'admission (3a) de la pompe électrique (3), l'élément élastique (32) étant connecté de façon rigide à la partie supérieure (30a) du filtre d'admission (30).

7. Système selon la revendication 6, **caractérisé en ce que** l'élément élastique (32) est moulé sur la partie supérieure (30a) de l'élément filtrant (30).

8. Système selon la revendication 6 ou 7, **caractérisé en ce qu'**un ressort de butée (40) est intercalé entre le moyen (34) permettant l'accouplement étanche du filtre d'admission (30) avec le conduit d'admission (3a) et la partie inférieure (30b) du filtre d'admission (30).

9. Système selon la revendication 8, **caractérisé en ce que** la partie inférieure (30b) du filtre d'admission (30) comporte un élément (42) servant à supporter une extrémité du ressort de butée (40).

10. Système selon la revendication 9, **caractérisé en ce que** des éléments (44) servant à supporter les extrémités des appendices (38) de l'élément d'engagement de l'élément élastique (32) sont connectés à l'élément de support (42).

11. Système selon la revendication 9 ou 10, **caractérisé en ce que** l'élément de support (42, 44) est fait d'une matière plastique moulée sur la partie inférieure (30b) de l'élément filtrant (30).
